# EUROPÄISCHE PATENTSCHRIFT

(11) **EP 2 576 996 B1**
(45) Veröffentlichungstag und Bekanntmachung des Hinweises auf die Patenterteilung: **15.07.2015**
(21) Anmeldenummer: 11721317.3
(22) Anmeldetag: 25.05.2011
(51) Int. Cl.: F01D 25/16, F01D 25/18, F16C 33/10

(54) **ABGASTURBOLADER MIT GLEITLAGER ZUR VERMINDERUNG VON FLUIDWIRBELN**
EXHAUST-GAS TURBOCHARGER WITH PLAIN BEARING FOR REDUCING FLUID TURBULENCE
TURBOCOMPRESSEUR À GAZ D'ÉCHAPPEMENT DOTÉ DE PALIERS LISSES POUR DIMINUER LES TOURBILLONS DE FLUIDE

(30) Priorität: 02.06.2010 DE 102010022574
(43) Veröffentlichungstag der Anmeldung: 10.04.2013
(73) Patentinhaber: Bosch Mahle Turbo Systems GmbH & Co. KG, 70376 Stuttgart (DE)
(72) Erfinder: NGUYEN-SCHÄFER, Thanh-Hung, 71679 Asperg (DE)
(74) Vertreter: BRP Renaud & Partner mbB Rechtsanwälte Patentanwälte Steuerberater
(86) Internationale Anmeldenummer: PCT/EP2011/058526
(87) Internationale Veröffentlichungsnummer: WO 2011/151231

(56) Entgegenhaltungen:
- DE-A1- 19 521 608
- GB-A- 2 335 713
- JP-A- 59 073 624
- US-A- 3 517 973
- US-A- 4 141 603
- US-A- 4 366 993
- US-A- 4 602 873
- US-A- 4 883 367
- US-A- 5 415 476
- US-A1- 2006 192 451

## Beschreibung

Die vorliegende Erfindung betrifft einen Abgasturbolader mit einer Rotorwelle, mit den Merkmalen des Oberbegriffs des Anspruchs 1.

Aus der EP 1 972 759 A2 ist ein Abgasturbolader bekannt, der in einem Radiallager, das eine Welle des Abgasturboladers rotationsbeweglich lagert, mehrere axial verlaufende Nuten aufweist. Dabei können die Nuten im Profil eine V- oder U-Form aufweisen. Die axial verlaufenden Nuten ermöglichen dabei vorteilhaft eine Fortentwicklung der Rotordynamik eines solchen Abgasturboladers, da ein Abgasturbolader mit derartigen axial verlaufenden Nuten in den Radiallagern eine erhöhte Resistenz gegenüber einer als selbsterregte subsynchronische Schwingung bekannte Bewegung der Rotorwelle aufweist. Dies gelingt durch eine Verminderung von Fluidwirbeln in dem zwischen dem Radiallager und der Rotorwelle angeordneten Fluidfilm, insbesondere im niederen Lastbereich.

Siehe auch GB-A-2335713.

Von der Bezeichnung Fluidwirbel ist ebenfalls der Fachbegriff "oil whirl" umfasst. Das Auftreten solcher Fluidwirbel ist bei Verwendung von Gleitlagern in Ladeeinrichtungen bekannt und wird aufgrund der rotierenden Rotorwelle um die Lagermitte verursacht, wobei in dem zwischen dem Radiallager und der Rotorwelle angeordneten Fluidfilm innere und äußere Fluidwirbel unterschieden werden können. Fluidwirbel treten insbesondere auch bei hochtourigen Drehzahlen auf und verursachen insbesondere bei höheren Drehzahlen, eine taumelnde Bewegung des Rotors bzw. der Rotorwelle in zylindrischen und konischen Schwingungsmoden, die auch als "selbsterregte subsynchronische Schwingung" bekannt ist. Insbesondere der innere Fluidwirbel induziert aufgrund der Strömung des inneren Fluidfilms einen Konstantton, dessen von der jeweiligen Fluidtemperatur abhängige Frequenz in einer Größenordnung der Halbfrequenz der Rotordrehzahl liegt. Dabei kann der durch den Fluidwirbel induzierte Konstantton eine Breitbandfrequenz von 600 bis 900 Hz aufweisen, die bei entsprechenden Motordrehzahlen von 1500 bis 3500 U/min auftreten. Die durch den Fluidwirbel auftretende selbsterregte Schwingung, die die Rotorauslenkung zu einem instabilen Zustand erregen kann, kann bei ungünstigen Betriebsbedingungen zu einem Lagerschaden führen. Eine derartige destruktive Schwingung kann dann auftreten, wenn die Frequenz des Konstanttons des Fluidwirbels gleich der kritischen Frequenz der ersten Biegeordnung des Rotor-Lager-Systems ist.

Des Weiteren kann bei derzeit üblichen Rotor-Lager-Systemen in Turbinen oder Ladeeinrichtungen ein häufiger Start-Stopp-Betrieb zu einem erhöhten Verschleiß des Rotor-Lager-Systems führen. Wird z. B. bei einem Kraftfahrzeug mit einer Ladeeinrichtung der Motor während z. B. einer Stadtfahrt und vor Verkehrsampeln kurz aus- und wieder eingeschaltet, so kann aufgrund eines Fluidmangels im Fluidfilm bei häufiger Anwendung des Start-Stopp-Betriebes und insbesondere beim Startbetrieb der Verschleiß am Radiallager bzw. auf der Rotorwelle vermehrt auftreten.

Die vorliegende Erfindung beschäftigt mit dem Problem, für einen Abgasturbolader sowie für ein dazugehöriges Betriebsverfahren, eine verbesserte oder andere Ausführungsform anzugeben, die sich insbesondere durch einen reduzierten Verschleiß auszeichnet.

Erfindungsgemäß wird dieses Problem durch den Gegenständ des unabhängigen Ansprüchs gelöst. Vorteilhafte Ausführungsformen sind Gegenstand der abhängigen Ansprüche.

Die Erfindung beruht auf dem allgemeinen Gedanken, eine Rotorwelle des Abgasturboladers, die mit zumindest einem Lager-Wellenabschnitt in einem, insbesondere als Gleitlager ausgebildeten, Radiallager rotationsbeweglich und auf einem Fluidfilm gleitend angeordnet ist, zumindest in einem Lager-Wellenabschnitt in zwei am jeweiligen Radiallagerendbereich angeordnete Außensegmente und ein zwischen den Außensegmenten positioniertes Innensegment zu unterteilen, wobei zumindest in einem der Außensegmente zumindest eine gegenüber der Umfangsrichtung der Rotorwelle geneigt verlaufende Quernut angeordnet ist.

Überraschenderweise wurde festgestellt, dass durch Anordnung von gegenüber einer Umfangsrichtung der Rotorwelle geneigt verlaufenden Quernuten in einem Lager-Wellenabschnitt der Rotorwelle, der Verschleiß von Rotorwelle und Radiallager sich erheblich verringern lässt.

Die Rotorwelle trägt zum Beispiel ein Verdichterrad eines Verdichters des Abgasturboladers und/oder ein Turbinenrad einer Turbine des Abgasturboladers. Die Rotorwelle ist hierzu zweckmäßig in einem Lagergehäuse des Abgasturboladers drehbar gelagert. Das Lagergehäuse befindet sich dabei üblicherweise axial zwischen einem Verdichtergehäuse und einem Turbinengehäuse.

Vorteilhaft stellt sich durch die zumindest eine in zumindest einem Außensegment angeordnete geneigte Quernut ein Pumpeneffekt ein, der durch die Bewegung der Rotorwelle zustande kommt. Aufgrund der Rotation der Rotorwelle wird durch eine bestimmte Lage der Quernut Fluid aus dem Fluidfilm des Innensegmentes in die Quernut hineingeschaufelt und entlang derselben zu dem zumindest einen Außensegment transportiert. Dadurch wird dem in dem zumindest einen Außensegment angeordneten Fluidfilm Fluid zugeführt. Somit gelingt es bei einem Startbetrieb der Rotorwelle den in dem Außensegment angeordneten Fluidfilm aufgrund des Pumpeneffektes durch die geneigte Quernut schneller aufzubauen, wodurch eine Verschleißminderung bei einem, insbesondere häufigen, Start-Stopp-Betrieb möglich ist. Des Weiteren ist der Druck in dem Fluidfilm zumindest in dem einen Außensegment in Abhängigkeit von der Drehzahl der Rotorwelle erhöht. Durch diesen erhöhten Druck im Fluidfilm bei laufendem Betrieb ist die Lagersteifigkeit erhöht und der Konstantton bzgl. des inneren Fluidwirbels verringert. Zudem ist aufgrund der erhöhten Lagersteifigkeit und der Verringerung des Konstanttons das Radiallager-Rotorwellen-System mit einer derartigen Quernut unempfindlicher gegen Schwingungen, Unwuchtschwingungen und Auslenkungen. Insgesamt ist dadurch der Verschleiß während des gesamten Betriebes einer solchen Ladeeinrichtung oder Turbine hinsichtlich des Radiallager-Rotorwellen-Systems deutlich verringert.

Eine derartig ausgebildete Rotorwelle kann zusammen mit zumindest einem Turbinenrad als Rotor in einer Ladeeinrichtung oder einer Turbine verwendet werden. Dabei ist ein Lager-Wellenabschnitt der Rotorwelle in einem Radiallager angeordnet und auf einen zwischen dem Radiallager und der Rotorwelle angeordneten Fluidfilm gleitend und rotationsbeweglich positioniert.

Das Radiallager kann dabei als rotierendes oder nicht-rotierendes Schwimmbuchsenlager ausgebildet sein. Ganz allgemein ist dabei die Verwendung eines Gleitlagers bevorzugt, wobei anstatt einem Schwimmbuchsenlager auch ein Festbuchsenlager zum Einsatz kommen kann. Das Radiallager weist zumindest einen im Wesentlichen radial verlaufenden Fluidkanal auf, der bevorzugt mittig in dem Radiallager angeordnet ist. Über diesen Fluidkanal kann der zwischen der Rotorwelle und dem Radiallager angeordnete Fluidfilm mit Fluid versorgt werden oder Fluid von dem Fluidfilm abtransportiert werden.

Die Rotorwelle kann im Bereich des in dem Radiallager angeordneten Lager-Wellenabschnittes in mehrere Segmente unterteilt werden. Dabei ist auf der Rotorwelle in dem Lager-Wellenabschnitt jeweils im Radiallagerendbereich ein Außensegment angeordnet und zwischen den beiden Außensegmenten ein Innensegment. Dabei ist das Innensegment derartig positioniert, dass es im Wesentlichen im Bereich der Öffnung des Fluidkanals des Radiallagers angeordnet ist. Somit wird über das Innensegment dem Lager-Wellenabschnitt Fluid zugeführt oder von dem Lager-Wellenabschnitt abgeführt.

In zumindest einem Außensegment ist zumindest eine Quernut positioniert. Dabei ist vorteilhaft in beiden Außensegmenten zumindest eine Quernut je Außensegment angeordnet. Besonders bevorzugt sind in jeweils einem Außensegment 8, 14, 16 oder 20 Quernuten angeordnet.

Das Innensegment kann quernutfrei ausgebildet sein oder es kann sich zumindest eine in einem Außensegment angeordnete Quernut in das Innensegment hinein erstrecken. In beiden Fällen, quernutfrei oder zumindest eine Quernut aufweisend, kann das Innensegment mit zumindest einer in Umlaufrichtung verlaufenden Ringnut versehen sein. Bevorzugt weist das Innensegment nur eine Ringnut auf, die sich ganz besonders bevorzugt in Längsrichtung der Rotorwelle über das gesamte Innensegment hinweg erstreckt.

Durch eine derartige Ringnut ist die Fluidzufuhr/-abfuhr über das Innensegment erleichtert. Ist zudem die zumindest eine Quernut in einem Anschlussbereich des Außensegmentes an das Innensegment fluidisch mit der Ringnut verbunden, so ist der Transport des Fluids zum Innensegment oder vom Innensegment weg vorteilhaft verbessert. Außerdem stellt das in der Ringnut angeordnete Fluid ein gewisses Fluidreservoir dar, das insbesondere beim Start-Stopp-Betrieb zum schnellen Aufbau des zwischen der Rotorwelle und dem Radiallager angeordneten und in dem Bereich der Außensegmente positionierten Fluidfilms verwendet werden kann.

Die zumindest eine Quernut ist auf jeden Fall gegenüber der Umfangsrichtung der Rotorwelle geneigt verlaufend angeordnet. Die Orientierung der Quernut ist jedoch in Abhängigkeit der Drehrichtung und der axialen Strömungsrichtung des Fluids zu wählen.

Dabei versteht man unter Umfangsrichtung die Richtung in der ein auf der Oberfläche der Rotorwelle verlaufender Umfang verläuft. Die Drehrichtung stellt die Richtung dar, in der sich die Rotorwelle dreht. Die Längsrichtung verläuft entlang der Längsachse der Rotorwelle. Die Fluidströmungsrichtung stellt diejenige Richtung dar, in der das Fluid im Bereich des Radiallagers fließt. Dabei können zwei Richtungen unterschieden werden. So kann über den Fluidkanal dem Radiallager Fluid zugeführt werden, sodass sich eine Fluidströmungsrichtung von dem Innensegment zum Außensegment einstellt. Wird über den Fluidkanal das Fluid aus dem Radiallager abgeführt, so ist eine Strömungsrichtung von dem zumindest einen Außensegment zum Innensegment gegeben.

In Abhängigkeit von der Drehrichtung und der Fluidströmungsrichtung ist bei einer Strömungsrichtung vom Innensegment zum Außensegment die zumindest eine Quernut in Drehrichtung vom Außensegment zum Innensegment verlaufend. Bei einer Fluidströmungsrichtung vom Außensegment zum Innensegment ist in Drehrichtung die zumindest eine Quernut vom Innensegment zum Außensegment verlaufend. Um dabei die jeweilige Orientierung der Quernut zu ermitteln, setzt man auf dem Innensegment oder Außensegment auf und fährt auf der Rotorwelle in Drehrichtung und zur Umfangsrichtung geneigt zu dem jeweiligen anderen Segment. Dies ergibt dann die Orientierung der Quernut auf der Rotorwelle.

Dabei ist die zumindest eine Quernut unter einem vorbestimmten Winkel zu einer auf einer Rotorwellenoberfläche gedachten Längsrichtung der Rotorwelle angeordnet. Dieser Winkel kann einen Wert von bevorzugt 15-30°, besonders bevorzugt von 30-45° und besonders bevorzugt von 45-60° einnehmen.

Im Falle, dass die Quernuten in das Innensegment hineinragen, kann im Innensegment noch ein ringförmiger Bereich verbleiben, der quernutfrei ist. Die Quernuten können sich jedoch auch im Innensegment schneiden. Sind in beiden Außensegmenten Quernuten angeordnet, so können diese Quernuten symmetrisch in den Außensegmenten angeordnet sein, oder versetzt zueinander.

Der Querschnitt einer solchen Quernut kann rechteckig, quadratisch oder dreieckig und/oder in Teilbereichen halbrund oder elypsoid sein. Bevorzugt sind die zur Rotorwellenoberfläche orientierten Kanten mit Abkantungen versehen. Diese Abkantung kann als Abrundung oder Kantenbruch sowie Anschrägung ausgebildet sein. Aufgrund der Abkantungen ist der Verschleiß, insbesondere im Radiallager, deutlich verringert.

Aufgrund der Orientierung einer solchen Quernut wird, durch die Drehbewegung der Rotorwelle, das Fluid aus dem Fluidfilm in die Quernut hineingedrückt und entlang derselben in Strömungsrichtung transportiert. Durch diesen Pumpeneffekt kann der Druck in dem Fluidfilm im Bereich der Außensegmente erhöht werden und dadurch die Lagersteifigkeit verbessert werden.

Vorteilhaft kann der Druckaufbau in dem Fluidfilm verbessert werden, durch eine abfallende Nuttiefe in Fluidströmungsrichtung entlang der Quernut. Durch den Pumpeneffekt wird Fluid entlang der Fluidströmungsrichtung innerhalb der Quernut transportiert und aufgrund der abfallenden Tiefe staut sich das Fluid entlang der Fluidströmungsrichtung in der Quernut zunehmend. Dadurch ist der Druckaufbau in dem Fluidfilm verbessert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: einen Lagerbereich eines Abgasturboladers,
- Fig. 2: einen in einem Radiallager angeordneten Lager-Wellenabschnitt,
- Fig. 3: mehrere in einem Außensegment angeordnete Quernuten,
- Fig. 4: verschiedene Ausführungsformen eines Querschnittes der Quernut,
- Fig. 5: eine abfallende Nuttiefe entlang der Fluidströmungsrichtung,
- Fig. 6: mehrere Ausführungsformen eines Lager-Wellenabschnittes.

Ein Lagerbereich 1 eines im übrigen nicht gezeigten Abgasturboladers weist zumindest ein Radiallager 2,2' auf, in dem eine Rotorwelle 3 eines Rotors 4 rotationsbeweglich gelagert ist. Üblicherweise wird der Lagerbereich 1 von dem Lagergehäuse 5 des Abgasturboladers umgeben.

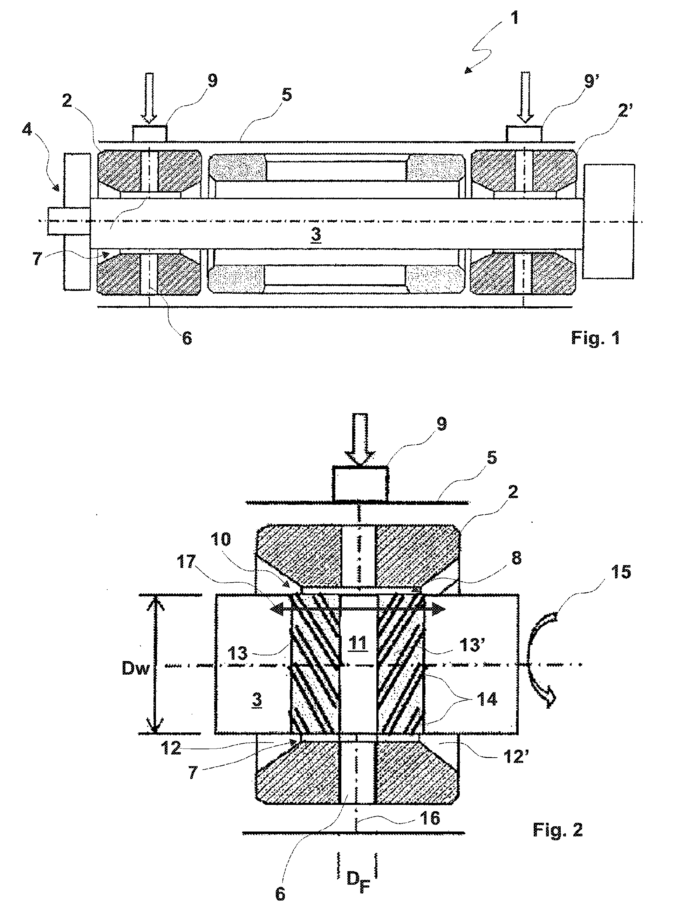

Das Radiallager 2,2' weist zumindest einen Fluidkanal 6 auf, mit dem dem Lagebereich 7 Fluid zugeführt werden kann oder mit dem von dem Lagebereich 7 das Fluid abführbar ist. Zwischen der Rotorwelle 3 und dem Radiallager 2,2' ist ein Fluidfilm 8 angeordnet, auf dem die Rotorwelle 3 gleiten kann. Der Fluidkanal 6 dient unter anderem mit anderen in Fig. 1 nicht gezeigten Einrichtungen zum stetigen Austausch des Fluidfilms 8. Über eine Fluidversorgungseinrichtung 9,9' kann der Fluidkanal 6 sowie das Radiallager 2,2' mit Fluid versorgt werden. Die Fluidversorgungseinrichtung 9,9' kann als Sichelnut ausgebildet sein.

In Fig. 2 ist ein Ausschnitt des Ladebereiches 1 im Bereich des Radiallagers 2,2' dargestellt. Dabei weist ein Lager-Wellenabschnitt 10 der Rotorwelle 3 eine segmentartige Struktur auf. Im Bereich des Fluidkanals 6 ist somit auf der Rotorwelle 3 ein Innensegment 11 angeordnet. Im jeweiligen Lagerendbereich 12,12' ist jeweils ein Außensegment 13,13' auf der Rotorwelle 3 angeordnet, sodass die beiden Außensegmente 13,13'das Innensegment 11 begrenzen. Dabei ist der Durchmesser der Rotorwelle 3 mit D_{w} gekennzeichnet und der Durchmesser des Fluidkanals 6 mit D_{F}.

In den Außensegmenten 13,13' sind mehrere Quernuten 14 so positioniert, dass sie geneigt gegenüber der Umfangsrichtung verlaufen. Dabei sind die Quernuten 14 in Drehrichtung 15 vom jeweiligen Außensegment 13,13' zum Innensegment 11 verlaufend.

Die Quernuten 14 erstrecken sich hier in einer Radialprojektion geradlinig. Ebenso ist eine Ausführungsform denkbar, bei der sich die Quernuten 14 in einer Radialprojektion gekrümmt erstrecken.

In Fig. 2 ist eine symmetrische Ausführungsform der Quernuten 14 dargestellt, wobei die Quernuten 14 bzgl. der Lagermittelebene 16 spiegelbildsymmetrisch auf der Rotorwelle 3 im Lager-Wellenabschnitt 10 positioniert sind. In dieser Ausführungsform verläuft die Fluidströmungsrichtung 17 vom Innensegment 11 zu den Außensegmenten 13,13'. Die Länge des Lager-Wellenabschnittes 10 ist mit L_{W} gekennzeichnet.

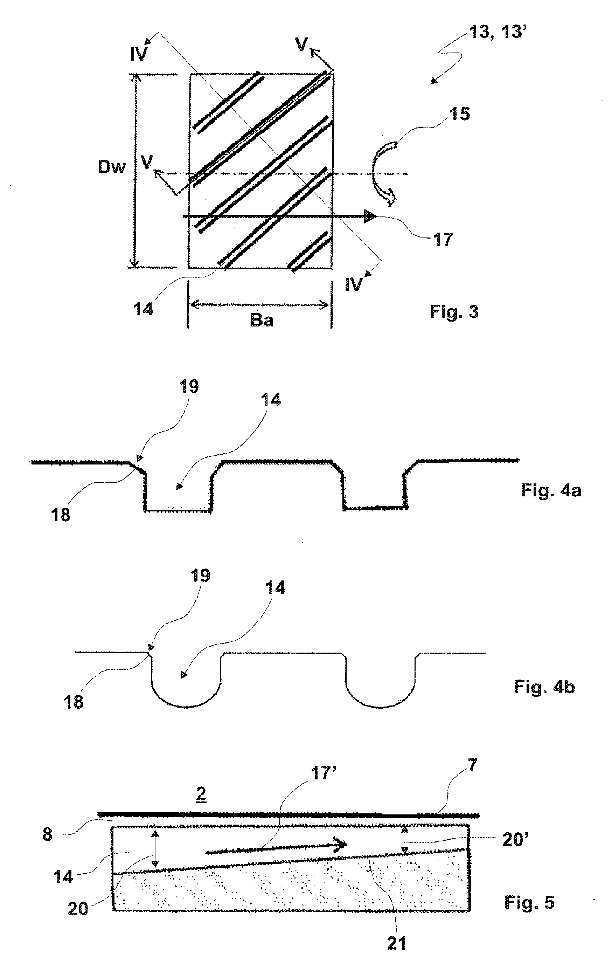

In Fig. 3 ist ein Ausschnitt eines Außensegmentes 13,13' dargestellt. Die Fluidströmungsrichtung 17 ist wieder vom Innensegment zum Außensegment wie eingezeichnet verlaufend und die Drehrichtung 15 verläuft analog der Fig. 2. Des Weiteren sind zwei Schnittlinien IV, V eingezeichnet, die jeweils in den Figuren 4 und 5 dargestellt sind.

Fig. 4a und 4b zeigen zwei verschiedene Ausführungsformen einer Quernut 14. In Fig. 4a ist eine rechteckige Form dargestellt, während die Fig. 4b eine halbrunde Form aufweist. In beiden Fällen sind die Kanten 18 der Quernuten 14 mit Abkantungen 19 versehen. Dabei kann die Abkantung 19 als Kantenbruch oder Abrundung ausgebildet sein.

Der Schnitt V der Fig. 3 ist in Fig. 5 dargestellt. Er zeigt eine Quernut 14, die in Fluidströmungsrichtung 17' innerhalb der Quernut 14 mit abfallender Nuttiefe 20, 20' ausgebildet ist. Dadurch ist ebenfalls im Bereich der Quernut 14 der Abstand zwischen dem Innenlagerbereich 7 und dem Quernutboden 21 in Fluidströmungsrichtung 17 absinkend. Durch diese abfallende Nuttiefenausbildung gelingt es, den Druck im Fluidfilm 8 schneller und höher einzustellen.

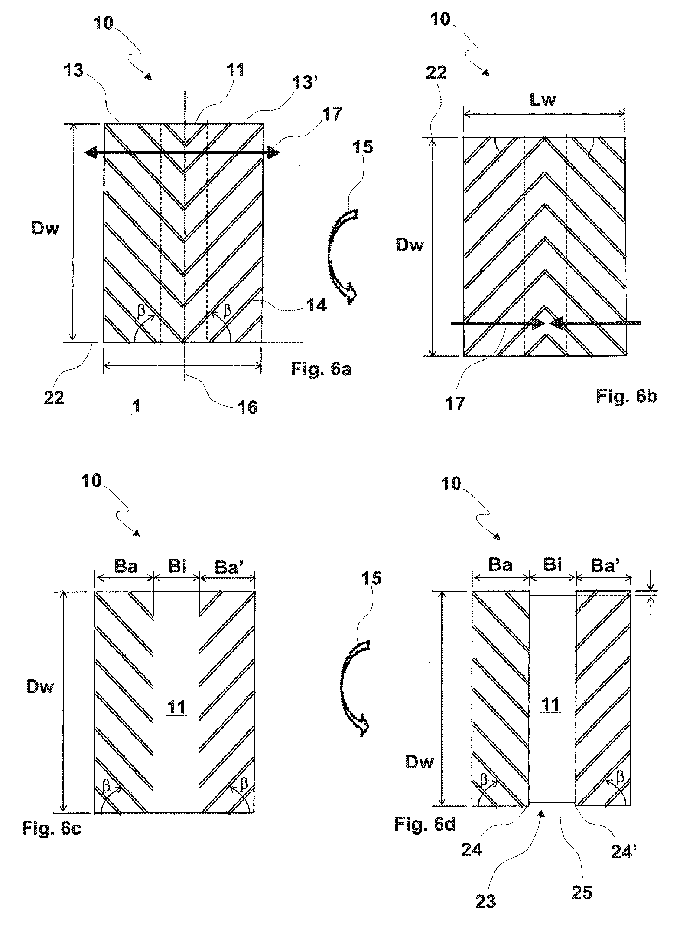

In den Figuren 6a bis 6d sind unterschiedliche Ausführungsformen des Lager-Wellenabschnittes 10 dargestellt. In der Fig. 6a verläuft die Fluidströmungsrichtung 17 vom Innensegment 11 zu den Außensegmenten 13,13' und die Drehrichtung 15 der Rotorwelle 3 wie eingezeichnet. Bzgl. der Lagermittelebene 16 ist hier eine symmetrische Ausführungsform dargestellt. Es ist aber ebenfalls eine unsymmetrische Ausbildung denkbar, wobei die Quernuten 14 in Umfangsrichtung versetzt zueinander angeordnet sind. Bzgl. einer auf der Rotorwellenoberfläche gedachten Längsrichtung 22 der Rotorwelle, ist die jeweilige Quernut unter einem Winkel β geneigt angeordnet. Dieser Winkel β kann bevorzugt einen Wert zwischen 15 und 30°, besonders bevorzugt einen Wert zwischen 30 und 45° und ganz besonders bevorzugt einen Wert zwischen 45 und 60° aufweisen.

Die in der Fig. 6b aufgezeigte Ausführungsform ist analog der Ausführungsform der Fig. 6a aufgebaut, mit dem einzigen Unterschied, dass die Fluidströmungsrichtung 17 vom Außensegment in das Innensegment orientiert ist. Demzufolge sind die Quernuten wie dargestellt verlaufend.

Die Fig. 6c zeigt eine Ausführungsform des Lager-Wellenabschnittes 10 mit einem nutfreien Innensegment 11. Die Breite des Innensegmentes ist mit Bᵢ bezeichnet, während der Breiten der Außensegmente mit Bₐ,Bₐ' gekennzeichnet sind. In einer besonders bevorzugten Ausführungsform sind die Breiten Bₐ,Bₐ' der Außensegmente gleich groß.

Die Ausführungsform der Fig. 6d weist eine sich über den gesamten Innensegmentbereich erstreckende Ringnut 23 auf. Bevorzugt sind dabei die Quernuten in einem Anschlussbereich 24,24' des jeweiligen Außensegmentes 13,13' an das Innensegment 11 so ausgebildet, dass sie fluidisch mit der Ringnut 23 verbunden sind. Bevorzugt befindet sich dabei der tiefste Punkt des Quernutbodens 21 auf Höhe des Ringnutbodens 25. In einer weiteren Ausführungsform kann der Quernutboden 21 von der Rotorwellenoberfläche aus betrachtet auch unterhalb des Ringnutbodens 25 angeordnet sein.

## Patentansprüche

1. Abgasturbolader mit einer Rotorwelle (3), die mit zumindest einem Lager-Wellenabschnitt (10) in einem als Gleitlager ausgebildeten Radiallager (2,2') rotationsbeweglich und auf einem Fluidfilm gleitend angeordnet ist, wobei
- der zumindest eine Lager-Wellenabschnitt (10) in zwei am jeweiligen axialen Radiallagerendbereich (12,12') angeordnete Außensegmente (13,13') und ein zwischen den Außensegmenten (13,13') positioniertes Innensegment (11) unterteilt ist,
- das Innensegment (11) im Wesentlichen im Bereich einer Öffnung eines Fluidkanals (6) des Radiallagers (2, 2') angeordnet ist
- zumindest in einem der Außensegmente (13,13') zumindest eine gegenüber der Umfangsrichtung der Rotorwelle (3) geneigt verlaufende Quernut (14) angeordnet ist,
**dadurch gekennzeichnet,**
- **dass** eine Nuttiefe (20, 20') zumindest einer solchen Quernut (14) einen in einer Fluidströmungsrichtung (17) entlang der Quernut (14) kontinuierlich abnehmenden Verlauf aufweist,
- **dass** der Abstand zwischen der Rotorwellen-Rotationsachse und dem quernutfreien Innensegment-Oberflächenbereich kleiner als der Abstand zwischen der Rotorwellen-Rotationsachse und einem quernutfreien Außensegment-Oberflächenbereich ist.

2. Abgasturbolader nach Anspruch 1,
**dadurch gekennzeichnet, dass**
bei der Fluidströmungsrichtung (17) von dem Innensegment (11) zu den Außensegmenten (13,13') die zumindest eine Quernut (14) entlang einer Drehrichtung (15) der Rotorwelle (3) von dem jeweiligen Außensegment (13,13') zum Innensegment (11) verläuft oder
bei einer Fluidströmungsrichtung (17) von den Außensegmenten (13,13') zu dem Innensegment (11) die zumindest eine Quernut (14) entlang der Drehrichtung (15) von dem Innensegment (11) zu dem jeweiligen Außensegment (13,13') verläuft.

3. Abgasturbolader nach einem oder mehreren der vorhergehenden Ansprüche,
**dadurch gekennzeichnet, dass**
zumindest eine solche Quernut (14) in einem vorbestimmten Winkel β zu einer auf einer Rotorwellenoberfläche gedachten Längsrichtung (22) der Rotorwelle (3) angeordnet ist.

4. Abgasturbolader nach einem oder mehreren der vorhergehenden Ansprüche,
**dadurch gekennzeichnet, dass**
zumindest eine solche Quernut (14) in das Innensegment (11) hineinragt und/oder
zumindest zwei solche Quernuten (14) im Innensegment (11) miteinander verbunden sind.

5. Abgasturbolader nach einem oder mehreren der vorhergehenden Ansprüche,
**dadurch gekennzeichnet, dass**
ein Abstand zwischen einer Rotorwellen-Rotationsachse und einem quernutfreien Innensegment-Oberflächenbereich gleich einem Abstand zwischen der Rotorwellen-Rotationsachse und einem quernutfreien Außensegment-Oberflächenbereich ist.

6. Abgasturbolader nach einem der Ansprüche 1 bis 3,
**dadurch gekennzeichnet, dass**
der Abstand zwischen der Rotorwellen-Rotationsachse und dem quernutfreien Innensegment-Oberflächenbereich gleich einem Abstand zwischen der Rotorwellen-Rotationsachse und einer tiefsten Stelle der zumindest einen Quernut (14) in einem Anschlußbereich (24) derselben an das Innensegment (11) ist.

7. Abgasturbolader nach einem oder mehreren der vorhergehenden Ansprüche,
**dadurch gekennzeichnet, dass**
die Nuttiefe (20, 20') zumindest einer solchen Quernut (14) entlang einer Fluidströmungsrichtung (17') innerhalb der Quernut (14) abnimmt.

8. Abgasturbolader nach einem oder mehreren der vorhergehenden Ansprüche,
**dadurch gekennzeichnet, dass**
die Nutkanten (18) zumindest einer solchen Quernut (14) eine Abrundung (19), eine Abkantung (19) oder einen Kantenbruch (19) aufweisen.

9. Abgasturbolader nach einem oder mehreren der vorhergehenden Ansprüche,
**dadurch gekennzeichnet, dass**
der Querschnitt zumindest einer solchen Quernut (14) rechteckig und/oder zumindest teilweise elipsoid und/oder zumindest teilweise halbrund ausgebildet ist.

## Claims

1. Exhaust gas turbocharger comprising a rotor shaft (3) which is arranged with at least one bearing-shaft portion (10) in a radial bearing (2, 2'), which is formed as a plain bearing, in a rotationally movable manner and so as to slide on a fluid film,
- the at least one bearing-shaft portion (10) being subdivided into two outer segments (13, 13'), which are arranged on the respective axial end region (12, 12') of the radial bearing, and an inner segment (11) positioned between the outer segments (13, 13'),
- the inner segment (11) being arranged substantially in the region of an opening in a fluid channel (6) of the radial bearing (2, 2'),
- at least one transverse groove (14) which extends so as to be inclined relative to the circumferential direction of the rotor shaft (3) being arranged at least in one of the outer segments (13, 13'),
**characterised in that**
- a groove depth (20, 20') of at least one such transverse groove (14) has a continuously decreasing course in a fluid flow direction (17) along the transverse groove (14),
- the spacing between the rotor shaft rotation axis and the transverse-groove-free inner segment surface region is smaller than the spacing between the rotor shaft rotation axis and a transverse-groove-free outer segment surface region.

2. Exhaust gas turbocharger according to claim 1, **characterised in that**, when the fluid flow direction (17) is from the inner segment (11) to the outer segments (13, 13'), the at least one transverse groove (14) runs in a direction of rotation (15) of the rotor shaft (3) from the respective outer segment (13, 13') to the inner segment (11) or, when the fluid flow direction (17) is from the outer segments (13, 13') to the inner segment (11), the at least one transverse groove (14) runs in the direction of rotation (15) from the inner segment (11) to the respective outer segment (13, 13').

3. Exhaust gas turbocharger according to one or more of the preceding claims, **characterised in that** at least one such transverse groove (14) is arranged at a predetermined angle β relative to a virtual longitudinal direction (22), on a rotor shaft surface, of the rotor shaft (3).

4. Exhaust gas turbocharger according to one or more of the preceding claims, **characterised in that** at least one such transverse groove (14) protrudes into the inner segment (11) and/or at least two such transverse grooves (14) are interconnected in the inner segment (11).

5. Exhaust gas turbocharger according to one or more of the preceding claims, **characterised in that** a spacing between a rotor shaft rotation axis and a transverse-groove-free inner segment surface region is equal to a spacing between the rotor shaft rotation axis and a transverse-groove-free outer segment surface region.

6. Exhaust gas turbocharger according to any of claims 1 to 3, **characterised in that** the spacing between the rotor shaft rotation axis and the transverse-groove-free inner segment surface region is equal to a spacing between the rotor shaft rotation axis and a deepest point of the at least one transverse groove (14) in a connecting region (24) thereof to the inner segment (11).

7. Exhaust gas turbocharger according to one or more of the preceding claims, **characterised in that** the groove depth (20, 20') of at least one such transverse groove (14) decreases in a fluid flow direction (17') within the transverse groove (14).

8. Exhaust gas turbocharger according to one or more of the preceding claims, **characterised in that** the groove edges (18) of at least one such transverse groove (14) have a rounded portion (19), a chamfer (19) or a chamfered edge (19).

9. Exhaust gas turbocharger according to one or more of the preceding claims, **characterised in that** the cross section of at least one such transverse groove (14) is rectangular and/or ellipsoidal at least in part and/or half-round at least in part.

## Revendications

1. Turbocompresseur à gaz d'échappement avec un arbre de rotor (3), qui est agencé mobile en rotation avec au moins un tronçon d'arbre de palier (10) dans un palier radial (2, 2') conçu sous forme de palier lisse et qui est agencé glissant sur un film fluide,
- l'au moins un tronçon d'arbre de palier (10) étant divisé en deux segments externes (13, 13') agencés au niveau de la zone terminale de palier radial (12, 12') axiale respective et un segment interne (11) positionné entre les segments internes (13, 13'),
- le segment interne (11) étant agencé globalement dans la zone d'une ouverture d'un canal de fluide (6) du palier radial (2, 2'),
- au moins une rainure transversale (14) qui s'étend inclinée par rapport à la direction circonférentielle de l'arbre de rotor (3) étant agencée au moins dans l'un des segments externes (13, 13'),
**caractérisé en ce que**
- une profondeur de rainure (20, 20') d'au moins une rainure transversale (14) de ce type a une allure qui diminue de manière continue le long de la rainure transversale (14) dans une direction d'écoulement de fluide (17),
- la distance entre l'axe de rotation d'arbre de rotor et la zone de surface de segment interne sans rainure transversale est inférieure à la distance entre l'axe de rotation d'arbre de rotor et une zone de surface de segment externe sans rainure transversale.

2. Turbocompresseur à gaz d'échappement selon la revendication 1, **caractérisé en ce que**
- pour une direction d'écoulement de fluide (17) allant du segment interne (11) aux segments externes (13, 13'), l'au moins une rainure transversale (14) s'étend, le long d'un sens de rotation (15) de l'arbre de rotor (3), du segment externe (13, 13') respectif au segment interne (11) ou,
- pour une direction d'écoulement de fluide (17) allant des segments externes (13, 13') au segment interne (11), l'au moins une rainure transversale (14) s'étend, le long du sens de rotation (15), du segment interne (11) au segment externe (13, 13') respectif.

3. Turbocompresseur à gaz d'échappement selon une ou plusieurs des revendications précédentes, **caractérisé en ce que**
- au moins une rainure transversale (14) de ce type est agencée selon un angle prédéterminé β par rapport à une direction longitudinale (22), visualisée sur une surface d'arbre de rotor, de l'arbre de rotor (3).

4. Turbocompresseur à gaz d'échappement selon une ou plusieurs des revendications précédentes, **caractérisé en ce que**
- au moins une rainure transversale (14) de ce type pénètre dans le segment interne (11) et/ou
- au moins deux rainures transversales (14) de ce type sont reliées l'une à l'autre dans le segment interne (14).

5. Turbocompresseur à gaz d'échappement selon une ou plusieurs des revendications précédentes, **caractérisé en ce que**
- une distance entre un axe de rotation d'arbre de rotor et une zone de surface de segment interne sans rainure transversale est égale à une distance entre l'axe de rotation d'arbre de rotor et une zone de surface de segment externe sans rainure transversale.

6. Turbocompresseur à gaz d'échappement selon l'une des revendications 1 à 3, **caractérisé en ce que**
- la distance entre l'axe de rotation d'arbre de rotor et la zone de surface de segment interne sans rainure transversale est égale à une distance entre l'axe de rotation d'arbre de rotor et le point le plus profond de l'au moins une rainure transversale (14) dans une zone de raccord (24) de celle-ci au segment interne (11).

7. Turbocompresseur à gaz d'échappement selon une ou plusieurs des revendications précédentes, **caractérisé en ce que**
- la profondeur de rainure (20, 20') d'au moins une rainure transversale (14) de ce type diminue le long d'une direction d'écoulement de fluide (17') à l'intérieur de la rainure transversale (14).

8. Turbocompresseur à gaz d'échappement selon une ou plusieurs des revendications précédentes, **caractérisé en ce que**
- les arêtes de rainure (18) d'au moins une rainure transversale (14) de ce type comportent un arrondi (19), un biseau (19) ou un chanfrein (19).

9. Turbocompresseur à gaz d'échappement selon une ou plusieurs des revendications précédentes, **caractérisé en ce que**
- la section transversale d'au moins une rainure transversale (14) de ce type est conçue rectangulaire et/ou au moins partiellement ellipsoïdale et/ou au moins partiellement demi-circulaire.
